# EUROPEAN PATENT SPECIFICATION

(11) **EP 3 077 245 B1**
(45) Date of publication and mention of the grant of the patent: **26.02.2020**
(21) Application number: 14828302.1
(22) Date of filing: 02.12.2014
(51) Int. Cl.: B60L 3/00, B60L 3/04, B60L 3/12, H02J 7/04, B60L 53/16, B60L 53/30, B60L 53/63, B60L 53/18

(54) **SYSTEM FOR MANAGING THE RECHARGE OF AN ELECTRIC OR HYBRID VEHICLE**
AUFLADUNGSVERWALTUNGSSYSTEM FÜR ELEKTRISCHES ODER HYBRIDFAHRZEUG
SYSTÈME DE GESTION DE RECHARGE D'UN VÉHICULE ÉLECTRIQUE OU HYBRIDE

(30) Priority: 02.12.2013 IT MI20132006
(43) Date of publication of application: 12.10.2016
(73) Proprietor: Iveco S.p.A., 10156 Torino (IT)
(72) Inventor: AIMO BOOT, Marco, I-10072 Caselle Torinese (IT); BERNARDINI, Alessandro, I-16126 Genova (IT); BERTOLOTTO, Cristian, I-19015 Levanto (IT)
(74) Representative: Fiume, Orazio
(86) International application number: PCT/IB2014/066522
(87) International publication number: WO 2015/083080

(56) References cited:
- EP-A2- 2 518 852
- DE-A1-102010 053 072
- DE-A1-102010 053 074
- DE-A1-102011 003 518

## Description

### Scope of the invention

The present invention relates to the field of systems for managing the recharge of electric or hybrid vehicles. DE102011003518 discloses a system for managing the recharge of an electric vehicle according to the preamble of claim 1.

### Background art

The technical standards IEC 62196-1, 62196-2 and 61851 are the reference standards in the field of standardization of the recharge specifications of electric or hybrid vehicles in order to ensure the interoperability between vehicles and recharge stations.

The standard IEC 61851-1 specifies four modes of interconnection of an electric vehicle with an external power grid.

Mode 3 is the reference one in Europe for public recharge stations. It provides for
- slow or fast recharge using a dedicated recharge station (column) provided with its own control unit,
- the cable not to be permanently attached to either the vehicle or the socket
- control and protection functions to be permanently installed in the recharge station through the above control unit,
- an intercommunication to be established between the vehicle and the control unit of the recharge station through the cable.

For a mode 3 recharge to be possible, the connector must have at least 7 pins, of which 3 phase 3F, neutral N, earth PE, a proximity pin and a control pin, also called pilot pin.

The proximity pin is connected via a resistance Rc of predefined value to the earth conductor.

For convenience, such a resistance is indicated as proximity resistance.

An electronic unit (VMU, from the expression Vehicle Management Unit) is installed on board the vehicle, which electronic unit is capable of measuring the value of such a resistance, recognizing the cable performance in terms of capacity of the cable itself to transfer electric current. The standard IEC 61851-1 specifies that the 13A current corresponds to Rc = 1.5 kOhm, 20A -> Rc = 680 Ohm, 32A -> Rc = 220 Ohm and 70A corresponds to Rc = 100 Ohm.

The control pin, on the other hand, allows the communication of a dedicated recharge control unit (RCU, the acronym of the expression Recharge Control Unit), installed on board the vehicle and capable of communicating with the control unit installed on board the recharge station.
The electronic control units RCU and VMU communicate with each other through the vehicle network CAN.
Unit VMU, among other things, manages the recognition of the cable and the interlock of the sockets with the respective plugs, so that the cable may not be disconnected until the recharge is not completed or aborted by the vehicle.
Unit RCU, through the control pin, verifies the correct connection to the earth system of the recharge station, negotiates with the recharge station the maximum current that can be supplied by the same and informs unit VMU, which in turn controls the vehicle battery charger accordingly.
A vehicle designed for functioning in mode 3 must necessarily communicate with a recharge station implementing the recharge mode 3.
This implies that the same vehicle, in order to be charged also in the private sector, needs to communicate with a suitable recharge station.
However, this entails a further management cost for the vehicle fleet, especially in case of fleets of tens or hundreds of vehicles.

### Summary of the invention

Therefore, the object of the present invention is to propose a system for managing the recharge of electric or hybrid vehicles complying with the above standards, but at the same time able to allow the recharge of vehicle batteries, also in the private sector, without the installation of a specific recharge station.

The idea at the basis of the present invention is to enable unit VMU to recharge the vehicle batteries, irrespective of the execution of the functions of unit RCU.

This is made possible on the basis of the reading of the value of the above proximity resistance, through said proximity pin.

In other words, if resistance Rc has a new predefined value compared to those already predetermined by the standards IEC, unit VMU can proceed to the activation of the vehicle battery charger, even if unit RCU is deactivated, or even if unit RCU, following an attempt of communication with a corresponding electronic unit, has reported a negative result, or a null value of power supplied by the recharge station.

Therefore, thanks to the present invention, it is possible to recharge a vehicle even in the absence of a proper recharge station, provided that the connection cable to the power grid has a new further predefined value of proximity resistance Rc.

Moreover, the present solution solves the problem of supplying the electricity needed for keeping in activation temperature some types of vehicle batteries, which would otherwise become out of power or, after a certain period of time, would disable completely, making it impossible to use the vehicle in a short time.

It is worth noting that the current division of the functions between unit VMU and RCU is only by way of example, therefore, assuming that a single control unit or multiple control units execute the functions described above in compliance with the standards IEC, the concept of neglecting the result of processes or inhibiting the execution of some processes is equivalent to neglecting the result of the operations carried out by the RCU or is equivalent to its deactivation, as described above. Therefore, hereafter, rather than referring to specific devices, reference will be made to logical blocks VMU and RCU, implementable in one or more vehicle processing units.

Therefore, such a new predefined resistance value not only enables a functioning of the VMU different from what standardized by the standards IEC, but at the same time it continues to indicate the cable performance in terms of capacity of the cable itself to transfer electricity.

For example, a value of 3 kOhm could indicate the connection to a private power grid of the three-phase type, without any recharge station, with maximum deliverable current of 32A. Continuing with the example, a value of 6 kOhm could indicate the connection to a private power grid of the single-phase type with maximum deliverable current of 16A and a value of 9 kOhm could indicate the connection to a private power grid of the single-phase type with maximum deliverable current of 10A.

The resistance values indicated herein are only by way of example.

The object of the present invention is a system for managing the recharge of an electric or hybrid vehicle according to claim 1.

Another object of the present invention is a method of functioning of a system for managing the recharge of an electric or hybrid vehicle.

Another object of the present invention is a recharge cable having a proximity resistance different from the above values regulated by the above standard IEC 61851-1.

A further object of the present invention is a vehicle comprising the above recharge management system.

The claims define the embodiments of the invention and form an integral part of the present description.

### Brief description of the figures

Further objects and advantages of the present invention will become apparent from the following detailed description of an exemplary embodiment thereof (and of variants thereof) and from the accompanying drawings, which are merely illustrative and non limiting, in which:
figure 1 shows an interconnection diagram of an electric or hybrid vehicle to a public recharge station according to the known art;
figure 2 schematically shows the interaction between vehicle logical functions and the pins of a type 2 or 3 plug (i.e. complying with the standard IEC 61851-2) according to the present invention,
figure 3 shows a block diagram relating to the above logical functions modified according to the present invention.

The same reference numerals and letters in the figures identify the same elements or components.

### Detailed description of embodiments

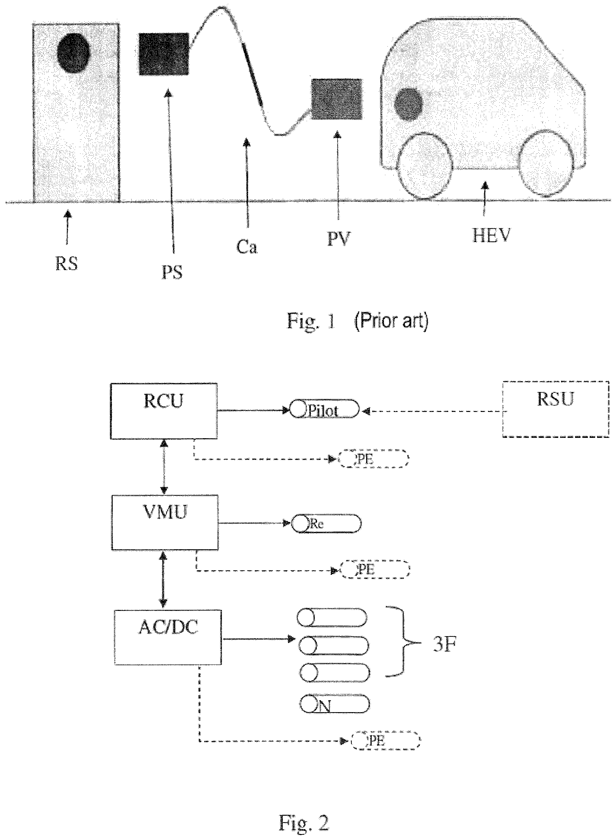

Figure 1 of the prior art shows a recharge station RS to which a cable Ca is connected, having a first end provided with plug PS to mechanically and electrically connect to the recharge station RS and a second end provided with plug PV to mechanically and electrically connect to an electric or hybrid vehicle HEV to be subjected to recharge of the batteries.

Figure 2 shows the logical block RCU, which as described above has the task of communicating with a respective processing unit RSU installed on board a public recharge station according to the functioning mode 3.

On the other hand, the logical block VMA has the task of verifying the performance characteristics of the cable through the reading of the proximity resistance Re and of verifying the vehicle side plug/socket interlock during the recharge operations. Moreover, on the basis of a supply current value negotiated by the RCU, it controls the battery charger AC/DC on board the vehicle. The battery charger takes the power signals from one of pin 3F and from the neutral, if the power grid available is single-phase, or from all pins 3F and from the neutral if the power grid available is three-phase.

Communications between RCU, VMU and AC/DC are done via the vehicle network CAN.

According to the present invention, when the logical block VMA detects a proximity resistance value Rc different from those specified by the standard IEC 61851-1, the functioning of the logical block RCU is inhibited or, if its functioning is still enabled, the outcome of the related processing is ignored.

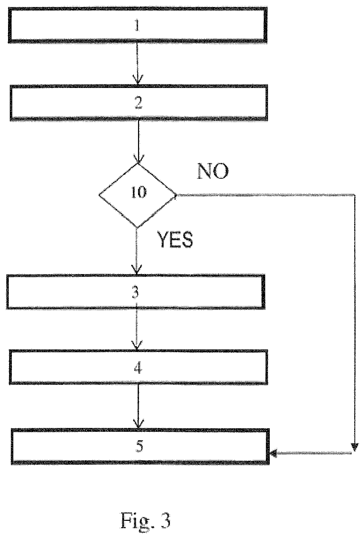

Figure 3 shows a method of functioning of the system for managing the recharge of an electric or hybrid vehicle according to the present invention.

In step 1, the cable connection to the vehicle takes place, in step 2, the proximity resistance value Rc is measured, in step 10, if such a value does not belong to the list of values predetermined by the standard IEC 61851-1, then (NO) next is step 5, that is to say, setting of a maximum value, for the battery charger, of a recharge current of the batteries as a function of only the cable characteristics.

If, on the other hand, the proximity resistance value RC belongs to the list of values predetermined by the standard IEC 61851-1 then,
in step 3, the logical block RCU is enabled,
in step 4, the logical block RCU asks the processing unit on board the recharge station to negotiate the maximum current deliverable by the station,
in step 5, the RCU transmits the maximum current value negotiated to the VMU and the VMU sets up the functioning of the battery charger according to such a negotiated value and to the performance characteristics of the cable.

It is clear that the current value set for the battery charger is the smaller between the cable capacity and the power deliverable by the recharge station.

An electric cable according to the present invention, therefore, has at a first end a single-phase or three-phase plug of the traditional five-pole type, i.e. with 3F + N + PE, while at a second end it is provided with a plug having 7 pins, as specified by the standards IEC 61851-2 of type 2 and/or 3, in which the pilot pin is insulated and the proximity pin is connected to the earth conductor PE by means of a proximity resistance Rc of predefined value, different from what predefined by the standard IEC 61851-1.

The present invention may be advantageously implemented by a computer program which comprises coding means for implementing one or more steps of the method, when this program is run on a computer. Therefore, it is understood that the scope of protection extends to said computer program and moreover to computer-readable means which comprise a recorded message, said computer-readable means comprising program coding means for implementing one or more steps of the method when said program is run on a computer.

From the above description, the man skilled in the art is able to implement the object of the invention without introducing any further construction details. The elements and the features shown in the different preferred embodiments may be combined without departing from the scope of protection of the present application.

## Claims

1. A system for managing the recharge of an electric or hybrid vehicle (HEV) comprising
- first means (VCU) for measuring a value of a proximity resistance (Rc) of a recharge cable (Ca) indicating the performance characteristics of the recharge cable (Ca),
- second means (RCU) for negotiating a value of recharge current with a recharge station (RS),
- a battery charger (AC/DC) controlled by said first means (VCU) on the basis of said performance characteristics of the recharge cable (Ca) and of said negotiated recharge current value,
wherein first means (VCU) are adapted to inhibit the functioning of said second means or to ignore said second processing means when said proximity resistance value takes at least one predetermined value belonging to a first set of values,
the system being **characterized in that** the first means (VCU) are further adapted to:
measure the value of the proximity resistance (Rc); and
if such value does not belong (NO) to the list of the predetermined values of the standard 61851-1 then set a maximum value of a recharge current as a function of the performance characteristics only of the cable (CA),
otherwise (SI) if the value of the proximity resistance (Rc) belongs to the list of the predetermined values of standard IEC 61851-1: negotiate a maximum current deliverable by the recharge station, then setting of a recharge current as a function of said negotiated maximum current and of performance characteristics of the cable.

2. The system according to claim 1, adapted to operate according to the mode 3 defined by the standard IEC 61851, when said proximity resistance value coincides with a value belonging to a second predefined set of values defined by the standard IEC 61851 itself, wherein an intersection between said first and second set is empty/null.

3. The system according to one of the previous claims, wherein said predefined value OF proximity resistance is associated to the performance of the cable and to the characteristics of the respective power grid.

4. The system according to claim 3, wherein said at least one predefined resistance value is associated to
- a connection of the vehicle (HEV) to a private power grid of the three-phase type, without any recharge station, with maximum deliverable current of 32A and/or
- a connection to a private power grid of the single-phase type, without any recharge station, with maximum deliverable current of 16A and/or
- a connection to a private power grid of the 10A single-phase type, without any recharge station, with maximum deliverable current of 10A.

5. A method of functioning of a system for managing the recharge of an electric or hybrid vehicle (HEV) comprising:
- first means (VCU) for measuring a value of a proximity resistance (Rc) of a recharge cable (Ca) indicating the performance characteristics of the recharge cable (Ca),
- second means (RCU) for negotiating a value of recharge current with a recharge station (RS),
- a battery charger (AC/DC) controlled by said first means (VCU) on the basis of said performance characteristics of the recharge cable (Ca) and of said recharge current value,
the method comprising the step of inhibiting the functioning of said second means or of ignoring said second processing means when said proximity resistance value takes at least one predetermined value belonging to a first set of values,
**characterized by** further comprising the steps of:
measuring the value of the proximity resistance (Rc); and
if such value does not belong (NO) to the list of the predetermined values of the standard 61851-1 then setting a maximum value of a recharge current as a function of the performance characteristics only of the cable (CA),
otherwise (SI) if the value of the proximity resistance (Rc) belongs to the list of the predetermined values of standard IEC 61851-1: negotiate a maximum current deliverable by the recharge station, then setting of a recharge current as a function of said negotiated maximum current and of performance characteristics of the cable.

6. The method according to claim 5, wherein said system is compliant with the mode 3 defined by the standard IEC 61851, when said proximity resistance value coincides with a value belonging to a second predefined set of values defined by the standard IEC 61851 itself, wherein an intersection between said first and second set is empty/null.

7. The method according to one of the previous claims, wherein said proximity resistance predefined value is associated to the performance of the cable and to the characteristics of the respective power grid.

8. The method according to claim 7, wherein said at least one predefined resistance value is associated to
- a connection of the vehicle (HEV) to a private power grid of the three-phase type, without any recharge station, with maximum deliverable current of 32A and/or
- a connection to a private power grid of the single-phase type, without any recharge station, with maximum deliverable current of 16A and/or
- a connection to a private power grid of the 10A single-phase type, without any recharge station, with maximum deliverable current of 10A.

9. Hybrid or electric vehicle (HEV) comprising a system for managing the recharge according to any one of the claims from 1 to 4.

10. Computer program comprising program code means adapted to perform all the steps of the claims from 5 to 8, when said program is run on a computer.

11. Computer-readable means comprising a recorded program, said computer-readable means comprising program code means adapted to perform the steps according to the claims from 5 to 8, when said program is run on a computer.

## Patentansprüche

1. Ein System zur Verwaltung des Ladens eines elektrischen Fahrzeugs oder eines Hybridfahrzeugs (HEV), umfassend
- erste Mittel (VCU) zur Messung eines Wertes eines Näherungswiderstands (Rc) eines Ladekabels (Ca), welcher die Leistungscharakteristika des Ladekabels (Ca) angibt,
- zweite Mittel (RCU) zur Verhandlung eines Wertes eines Ladestroms mit einer Ladestation (RS),
- ein Batterieladegerät (AC/DC), welches von den ersten Mitteln (VCU) auf Basis der Leistungscharakteristika des Ladekabels (Ca) und des verhandelten Ladestromwertes gesteuert wird,
wobei die ersten Mittel (VCU) ausgeführt sind, um die Funktionsfähigkeit der zweiten Mittel zu unterbinden oder um die zweiten Prozessmittel zu ignorieren, wenn der Näherungswiderstandswert mindestens einen vordefinierten Wert aus einem ersten Satz an Werten einnimmt,
welches System **dadurch gekennzeichnet ist, dass** die ersten Mittel (VCU) weiter ausgeführt sind, um:
den Wert des Näherungswiderstands (Rc) zu messen; und
falls dieser Wert nicht zu der Liste der vordefinierten Werte der Norm 61851-1 gehört (NEIN), dann einen Maximalwert eines Ladestroms als eine Funktion der Leistungscharakteristika nur des Ladekabels (Ca) festzulegen,
andernfalls (SI), falls der Wert des Näherungswiderstands (Rc) zu der Liste der vordefinierten Werte der Norm IEC 61851-1 gehört: einen Maximalstrom, welcher von der Ladestation lieferbar ist, zu verhandeln, und dann einen Ladestrom als eine Funktion des verhandelten Maximalstroms und der Leistungscharakteristika des Kabels festzulegen.

2. Ein System nach Anspruch 1, ausgeführt um nach dem Modus 3, der durch die Norm IEC 61851 festgelegt wird, zu arbeiten, wenn der Näherungswiderstandswert mit einem Wert eines zweiten vordefinierten Wertsatzes, welcher durch die Norm IEC 61851 selbst bestimmt wird, übereinstimmt, wobei eine Schnittmenge zwischen dem ersten und dem zweiten Satz leer/null ist.

3. Ein System nach einem der vorstehenden Ansprüche, wobei der vordefinierte Wert des Näherungswiderstands mit der Leistung des Kabels und den Charakteristika des jeweiligen Stromnetzes verknüpft ist.

4. Ein System nach Anspruch 3, wobei mindestens ein vordefinierter Widerstandwert Folgendem zugeordnet ist:
- einer Verbindung des Fahrzeugs (HEV) zu einem privaten, dreiphasigen Stromnetz, ohne jegliche Ladestation, mit maximaler Stromstärke von 32A und/oder
- einer Verbindung zu einem privaten, einphasigen Stromnetz, ohne jegliche Ladestation, mit maximaler Stromstärke von 16A und/oder
- einer Verbindung zu einem privaten Stromnetz des einphasigen 10A-Typs, ohne jegliche Ladestation, mit maximaler Stromstärke von 10A.

5. Ein Verfahren zum Betrieb eines Systems für die Verwaltung des Ladens eines elektrischen Fahrzeugs oder eines Hybridfahrzeugs (HEV), umfassend:
- erste Mittel (VCU) zur Messung eines Wertes eines Näherungswiderstands (Rc) eines Ladekabels (Ca), welcher die Leistungscharakteristika des Ladekabels (Ca) angibt,
- zweite Mittel (RCU) zur Verhandlung eines Wertes eines Ladestroms mit einer Ladestation (RS),
- ein Batterieladegerät (AC/DC), welches von den ersten Mitteln (VCU) auf Basis der Leistungscharakteristika des Ladekabels (Ca) und des verhandelten Ladestromwertes verwaltet wird,
wobei das Verfahren den Schritt umfasst, die Funktionsfähigkeit der zweiten Mittel zu unterbinden oder die zweiten Prozessmittel zu ignorieren, wenn der Näherungswiderstandswert mindestens einen vordefinierten Wert aus einem ersten Satz an Werten einnimmt,
**dadurch gekennzeichnet, dass** es weiter die Schritte umfasst:
den Wert des Näherungswiderstands (Rc) zu messen; und
falls dieser Wert nicht zu der Liste der vordefinierten Werte der Norm 61851-1 gehört (NEIN), dann einen Maximalwert eines Ladestroms als eine Funktion der Leistungscharakteristika nur des Ladekabels (CA) festzulegen,
andernfalls (SI), falls der Wert des Näherungswiderstands (Rc) zu der Liste der vordefinierten Werte der Norm IEC 61851-1 gehört: einen Maximalstrom, welcher von der Ladestation lieferbar ist, mit dieser zu verhandeln, und dann einen Ladestroms als eine Funktion des verhandelten Maximalstroms und der Leistungscharakteristika des Kabels festzulegen.

6. Verfahren nach Anspruch 5, wobei das System mit dem Modus 3 definiert durch die Norm IEC 61851 konform ist, wenn der Näherungswiderstandswert mit einem Wert eines zweiten vordefinierten Wertsatzes, welcher durch die Norm IEC 61851 selbst bestimmt wird, übereinstimmt, wobei eine Schnittmenge zwischen dem ersten und dem zweiten Satz leer/null ist.

7. Ein Verfahren nach einem der vorstehenden Ansprüche, wobei der vordefinierte Wert des Näherungswiderstands mit der Leistung des Kabels und den Charakteristika des jeweiligen Stromnetzes verknüpft ist.

8. Ein Verfahren nach Anspruch 7, wobei mindestens ein vordefinierter Widerstandwert Folgendem zugeordnet ist:
- einer Verbindung des Fahrzeugs (HEV) zu einem privaten, dreiphasigen Stromnetz, ohne jegliche Ladestation, mit maximaler Stromstärke von 32A und/oder
- einer Verbindung zu einem privaten, einphasigen Stromnetz, ohne jegliche Ladestation, mit maximaler Stromstärke von 16A und/oder
- einer Verbindung zu einem privaten Stromnetz des einphasigen 10A-Typs, ohne jegliche Ladestation, mit maximaler Stromstärke von 10A.

9. Hybrid- oder elektrisches Fahrzeug (HEV), umfassend ein System für das Verwalten der Ladung nach einem der Ansprüche 1 bis 4.

10. Computerprogramm, umfassend Programmcodemittel, ausgeführt, um alle Schritte der Ansprüche 5 bis 8 auszuführen, wenn das Programm auf einem Rechner ausgeführt wird.

11. Computerlesbare Mittel, umfassend ein aufgezeichnetes Programm, wobei die computerlesbaren Mittel Programmcodemittel umfassen, welche ausgeführt sind, um die Schritte der Ansprüche 5 bis 8 auszuführen, wenn das Programm auf einem Rechner ausgeführt wird.

## Revendications

1. Système de gestion de la recharge d'un véhicule électrique ou hybride (VEH) comprenant
- des premiers moyens (VCU) de mesure d'une valeur d'une résistance de proximité (Rc) d'un câble de recharge (Ca) indiquant les caractéristiques de performance du câble de recharge (Ca),
- des seconds moyens (RCU) de négociation d'une valeur de courant de recharge avec une station de recharge (RS),
- un chargeur de batterie (AC/DC) commandé par lesdits premiers moyens (VCU) sur la base desdites caractéristiques de performance du câble de recharge (Ca) et de ladite valeur de courant de recharge négociée,
dans lequel les premiers moyens (VCU) sont adaptés pour empêcher le fonctionnement desdits seconds moyens ou pour ignorer lesdits seconds moyens de traitement lorsque ladite valeur de résistance de proximité prend au moins une valeur prédéterminée appartenant à un premier ensemble de valeurs,
le système étant **caractérisé en ce que** les premiers moyens (VCU) sont en outre adaptés pour :
mesurer la valeur de la résistance de proximité (Rc) ; et
si une telle valeur n'appartient pas (NO) à la liste des valeurs prédéterminées de la norme 61851-1 alors régler une valeur maximale d'un courant de recharge en fonction des caractéristiques de performance seulement du câble (CA),
sinon (SI) si la valeur de la résistance de proximité (Rc) appartient à la liste des valeurs prédéterminées de la norme IEC 61851-1 : négocier un courant maximal pouvant être fourni par la station de recharge, puis régler un courant de recharge en fonction dudit courant maximal négocié et des caractéristiques de performance du câble.

2. Système selon la revendication 1, adapté pour fonctionner selon le mode 3 défini par la norme IEC 61851, lorsque ladite valeur de résistance de proximité coïncide avec une valeur appartenant à un second ensemble prédéfini de valeurs définies par la norme IEC 61851 elle-même, dans lequel une intersection entre lesdits premier et second ensembles est vide/nulle.

3. Système selon l'une quelconque des revendications précédentes, dans lequel ladite valeur prédéfinie de la résistance de proximité est associée à la performance du câble et aux caractéristiques du réseau électrique respectif.

4. Système selon la revendication 3, dans lequel ladite au moins une valeur de résistance prédéfinie est associée à
- une connexion du véhicule (VEH) à un réseau électrique privé du type triphasé, sans aucune station de recharge, avec un courant maximum pouvant être fourni de 32 A et/ou
- une connexion à un réseau électrique privé du type monophasé, sans aucune station de recharge, avec un courant maximum pouvant être fourni de 16 A et/ou
- une connexion à un réseau électrique privé du type monophasé de 10 A, sans aucune station de recharge, avec un courant maximum pouvant être fourni de 10 A.

5. Méthode de fonctionnement d'un système de gestion de la recharge d'un véhicule électrique ou hybride (VEH) comprenant :
- des premiers moyens (VCU) de mesure d'une valeur d'une résistance de proximité (Rc) d'un câble de recharge (Ca) indiquant les caractéristiques de performance du câble de recharge (Ca),
- des seconds moyens (RCU) de négociation d'une valeur de courant de recharge avec une station de recharge (RS),
- un chargeur de batterie (AC/DC) commandé par lesdits premiers moyens (VCU) sur la base desdites caractéristiques de performance du câble de recharge (Ca) et de ladite valeur de courant de recharge,
la méthode comprenant l'étape consistant à empêcher le fonctionnement desdits seconds moyens ou à ignorer lesdits seconds moyens de traitement lorsque ladite valeur de résistance de proximité prend au moins une valeur prédéterminée appartenant à un premier ensemble de valeurs,
**caractérisée en ce qu'**elle comprend en outre les étapes de :
mesure de la valeur de la résistance de proximité (Rc) ; et
si une telle valeur n'appartient pas (NO) à la liste des valeurs prédéterminées de la norme 61851-1 alors réglage d'une valeur maximale d'un courant de recharge en fonction des caractéristiques de performance seulement du câble (CA),
sinon (SI) si la valeur de la résistance de proximité (Rc) appartient à la liste des valeurs prédéterminées de la norme IEC 61851-1 : négociation d'un courant maximal pouvant être fourni par la station de recharge, puis réglage d'un courant de recharge en fonction dudit courant maximal négocié et des caractéristiques de performance du câble.

6. Méthode selon la revendication 5, dans laquelle ledit système est conforme au mode 3 défini par la norme IEC 61851, lorsque ladite valeur de résistance de proximité coïncide avec une valeur appartenant à un second ensemble prédéfini de valeurs définies par la norme IEC 61851 elle-même, dans laquelle une intersection entre lesdits premier et second ensembles est vide/nulle.

7. Méthode selon l'une des revendications précédentes, dans laquelle ladite valeur prédéfinie de la résistance de proximité est associée à la performance du câble et aux caractéristiques du réseau électrique respectif.

8. Méthode selon la revendication 7, dans laquelle ladite au moins une valeur de résistance prédéfinie est associée à
- une connexion du véhicule (VEH) à un réseau électrique privé du type triphasé, sans aucune station de recharge, avec un courant maximum pouvant être fourni de 32 A et/ou
- une connexion à un réseau électrique privé du type monophasé, sans aucune station de recharge, avec un courant maximum pouvant être fourni de 16 A et/ou
- une connexion à un réseau électrique privé du type monophasé de 10 A, sans aucune station de recharge, avec un courant maximum pouvant être fourni de 10 A.

9. Véhicule hybride ou électrique (VEH) comprenant un système de gestion de la recharge selon l'une quelconque des revendications 1 à 4.

10. Programme informatique comprenant des moyens de code de programme adapté pour réaliser toutes les étapes des revendications 5 à 8, lorsque ledit programme est exécuté sur un ordinateur.

11. Moyens lisibles par ordinateur comprenant un programme enregistré, lesdits moyens lisibles par ordinateur comprenant des moyens de code de programme adaptés pour réaliser les étapes selon les revendications 5 à 8, lorsque ledit programme est exécuté sur un ordinateur.
